# EUROPEAN PATENT APPLICATION

(11) **EP 2 182 597 A1**
(43) Date of publication of application: **05.05.2010**
(21) Application number: 08828385.8
(22) Date of filing: 28.08.2008
(51) Int. Cl.: H01S 3/06, G02B 6/02, G02B 6/036, H01S 3/10

(54) **RARE-EARTH DOPED CORE MULTI-CLAD FIBER, FIBER AMPLIFIER, AND FIBER LASER**

(30) Priority: 28.08.2007 JP 2007220891
(71) Applicant: Fujikura, Ltd., Tokyo 135-8512 (JP)
(72) Inventor: TANIGAWA, Shoji, Sakura-shi Chiba 285-8550 (JP); ICHII, Kentaro, Sakura-shi Chiba 285-8550 (JP)
(74) Representative: Cabinet Plasseraud
(86) International application number: PCT/JP2008/065422
(87) International publication number: WO 2009/028614

(57) **Abstract**

A rare-earth doped core multi-clad fiber that includes: a core that includes a rare-earth element; and a plurality of cladding layers that surround the core, in which: an outermost cladding of the plurality of cladding layers is made of polymer cladding; the plurality of cladding layers have a polygonal inner cladding; and a shape of a boundary between a second cladding from the outside and the outermost cladding does not have two-fold rotational symmetry. As a result, it is possible to provide a rare-earth doped core multi-clad fiber for an optical amplifier and fiber laser that has low skew and is inexpensive.

## Description

### TECHNICAL FIELD

The present invention relates to a fiber amplifier or a fiber laser in light amplification and light oscillation technology that inputs pumping light into a multi-clad fiber and outputs after amplifying or laser oscillating signal light by stimulated emission by the pumping light, and particularly relates to a rare-earth doped core multi-clad fiber with a structure in which the pumping light is efficiently coupled to a core in a multi-clad fiber while constraining skew light and a structure in which an outer diameter of the fiber is easily controlled during fiber drawing and the outer diameter of the fiber is stable, and to a high performance and low-cost fiber amplifier and fiber laser that use this fiber. Priority is claimed on Japanese Patent Application No. 2007-220891, filed August 28, 2007, the content of which is incorporated herein by reference.

### BACKGROUND ART

In a fiber amplifier or a fiber laser that amplifies or laser oscillates signal light by an optical fiber that is doped with a rare-earth element, a need for higher output power of the fiber amplifier or the fiber laser has been increased. As one method of achieving high output power, a method in which a waveguide structure of a rare-earth doped optical fiber serving as an amplifying medium is made into a multi-clad structure such as a so-called double-clad structure or triple-clad structure, in which a plurality of waveguide structures are provided in a concentric circular manner, has been proposed. This method has contributed to higher output power of fiber amplifiers and fiber lasers.

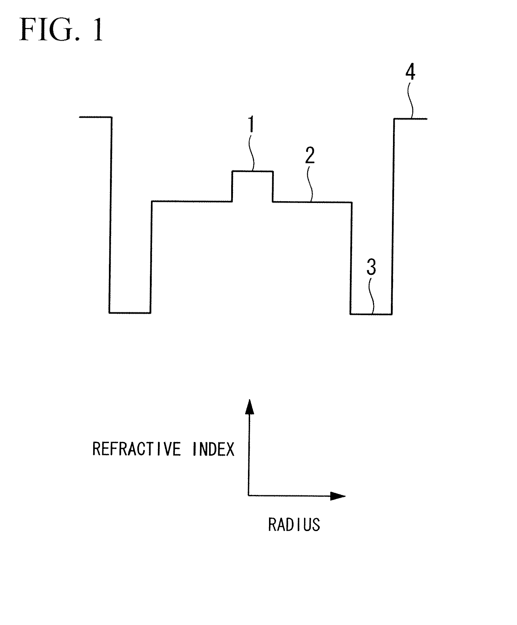

FIG. 1 is a drawing that shows one example of a refractive index profile of the cross section of a fiber that has a double-clad structure of conventional rare-earth doped optical fibers. The double-clad fiber of this example has a core 1 that is doped with a rare-earth element, an inner cladding 2 that surrounds the periphery of the core 1, and an outer cladding 3 that surrounds the inner cladding 2. The refractive index is highest for the core 1, with a rare-earth element being doped therein. On the periphery thereof is disposed the inner cladding 2 with a refractive index lower than that of the core 1. Further to the outside thereof is disposed the outer cladding 3 with a refractive index that is lower than that of the inner cladding 2. Generally, a protective coating 4 that is made of a resin such as UV-curable resin for protecting the fiber is coated on the outside thereof.

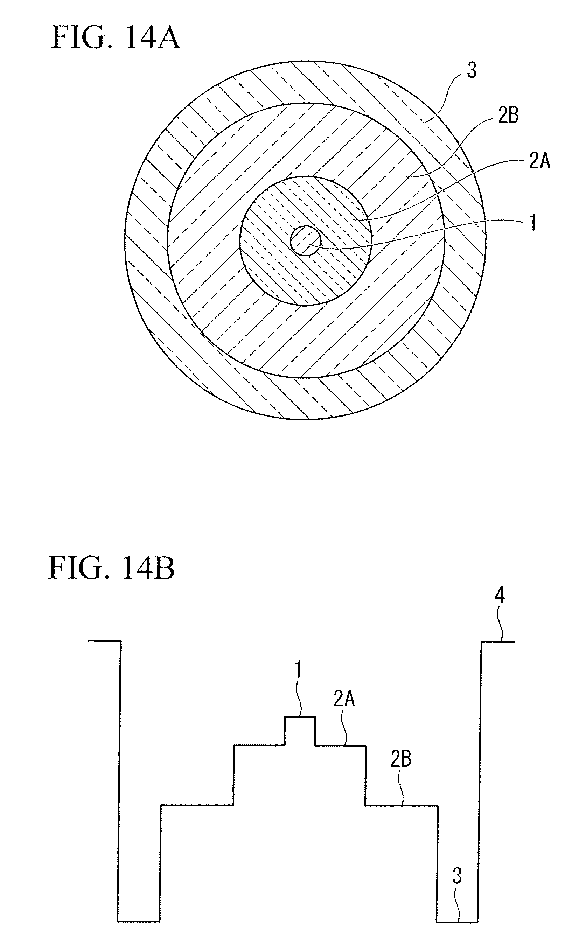

In the some cases of adopting a multi-clad structure, the inner cladding has a plurality of layer structures (refer to Patent Document 6). As one example, FIG. 14A and FIG. 14B show a fiber that has a conventional triple-clad structure. FIG. 14A is a cross-sectional view of a fiber with a triple-clad structure, while FIG. 14B is a drawing that shows the refractive index profile of the cross section of the fiber. The fiber has a structure in which a first cladding 2A, a second cladding 2B, and a third cladding (outer cladding 3) are provided in that order in a concentric circular manner on the outside of a core 1 that has been doped with a rare-earth element, with a protective coating 4 provided further to the outside thereof.

In an amplifier or laser oscillator that uses a rare-earth doped fiber that has a multi-clad structure (hereinbelow referred to as a rare-earth doped core multi-clad fiber) as an amplifying medium, there is a skew mode of pumping light that propagates through the inner cladding as one restriction factor of the amplification (or laser oscillation) efficiency. For example, Patent Document 2 describes the skew mode in detail. Due to the skew mode, pumping light, which should be used for amplification of the signal light by being absorbed in rare-earth ions that have been doped into the core, propagates through the fiber such that the pumping light propagates through the inner cladding in a waveguide mode without across the core. For this reason, there are problems of having to make the fiber length longer in order to obtain the required gain, to decrease in the amplification efficiency, and the like. Moreover, since perturbations (bending, twisting, and the like) greatly influence the skew mode, when the probability of the skew mode is large, a problem of the output not being stable arises.

Various methods in relation to countermeasures against the skew modes have been proposed. For example, a method of reducing the influence of the skew mode by shifting the center axes of the core and cladding (eccentric core structure, refer to Patent Document 1) and a method of reducing the skew mode itself by making a portion of the periphery of the inner cladding (D-shape structure, refer to Patent Document 3) or the entire of the periphery of the inner cladding (polygonal structure, refer to Patent Document 2 and Non-Patent Document 1) non-circular have been proposed. Among these methods, a polygonal cladding structure is a structure that is best used from the viewpoint of manufacturing, and is an effective method.
[Patent Document 1] Japanese Unexamined Patent Application, First Publication No. H01-260405
[Patent Document 2] Published Japanese Translation No. H10-503885 of the PCT International Publication
[Patent Document 3] Published Japanese Translation No. H10-510104 of the PCT International Publication
[Patent Document 4] Japanese Unexamined Patent Application, First Publication No. H06-206734
[Patent Document 5] Japanese Unexamined Patent Application, First Publication No. H08-319129
[Patent Document 6] PCT International Publication No. WO2006-017802 pamphlet
[Non-Patent Document 1] M.H. Muendel, CLEO, '96 CTuU2
[Non-Patent Document 2] http://www.keyence.co.jp/hennilsokuteiki/index.jsp

### DISCLOSURE OF THE INVENTION

### PROBLEMS TO BE SOLVED BY THE INVENTION

However, in the conventional techniques described above, there are mainly difficulties in the manufacturing of a rare-earth doped core multi-clad fiber, and it has not been possible to manufacture a fiber of the required structure at a reasonable cost.
First, in the eccentric core fiber disclosed in Patent Document 1, there are difficulties in the manufacture of a fiber preform. This is because the general manufacturing conditions (including the VAD method or MCVD method, OVD method, PCVD method and the like) of fiber preforms in which the preform is manufactured coaxially, and the requirement of eccentricity are opposed to each other, so in order to realize both requirements, it is necessary to perform eccentric grinding of the preform.
Also, there are manufacturing difficulties in the D-shape structure that is disclosed in Patent Document 3 and the polygonal structure disclosed in Patent Document 2 and Non-Patent Document 1, so it is not realized that a fiber with the desired structure is manufactured cheaply.

The present invention was devised in view of the above circumstances, and has as an object the provision of a rare-earth doped core multi-clad fiber for an optical amplifier and fiber laser that has low skew and is inexpensive.

### MEANS FOR SOLVING THE PROBLEMS

In order to achieve the object, an aspect of the present invention provides a rare-earth doped core multi-clad fiber which includes: a core that includes a rare-earth element; and a plurality of cladding layers that surround the core, in which: an outermost cladding of the plurality of cladding layers is made of polymer cladding; the plurality of cladding layers have a polygonal inner cladding; and a shape of a boundary between a second cladding from the outside and the outermost cladding does not have two-fold rotational symmetry.

In the rare-earth doped core multi-clad fiber of the present invention, it is preferable that the difference between the maximum outer diameter and the minimum outer diameter of the cross section of the polygonal inner cladding be 6% or less of the average outer diameter; and that the cross section of the polygonal inner cladding have 15 sides or less.

In the rare-earth doped core multi-clad fiber of the present invention, it is preferable that the cross section of the polygonal inner cladding be substantially a regular polygonal shape which has five sides or more and does not have two-fold rotational symmetry.

In the rare-earth doped core multi-clad fiber of the present invention, it is preferable that the regular polygon be a pentagon, a heptagon, or a nonagon.

In the rare-earth doped core multi-clad fiber of the present invention, it is preferable that the fiber include at least one of Yb or Er as the rare-earth element.

In the rare-earth doped core multi-clad fiber of the present invention, it is preferable that the multi-clad fiber be a double-clad fiber.

Also, the present invention provides a fiber amplifier that has the afore-mentioned rare-earth doped core multi-clad fiber as a light amplifying medium.

Also, the present invention provides a fiber laser that has the afore-mentioned rare-earth doped core multi-clad fiber as a light amplifying medium.

### ADVANTAGEOUS EFFECTS OF THE INVENTION

In the rare-earth doped core multi-clad fiber of the present invention, since the shape of the boundary between the second cladding from the outside and the outermost cladding does not have two-fold rotational symmetry, during fabrication of a fiber perform for fiber drawing, it is possible to improve controllability of the outer diameter of the second cladding from the outside. As a result, it is possible to provide a rare-earth doped core multi-clad fiber that has an outstanding skew mode constraining effect and is manufactured at low cost.

Also, the fiber amplifier and fiber laser of the present invention includes the rare-earth doped core multi-clad fiber of the present invention which has an outstanding skew mode constraining effect and is manufactured at low cost, as a light amplifying medium. As a result, it is possible to provide a low cost fiber amplifier and fiber laser.

### BRIEF DESCRIPTION OF THE DRAWINGS

FIG. 1 is a drawing that shows one example of a refractive index profile of a cross section of an optical fiber that has a conventional double-clad structure.
FIG. 2A is a cross-sectional view that shows one embodiment of a rare-earth doped core multi-clad optical fiber of the present invention.
FIG. 2B is a drawing that shows the refractive index profile of the optical fiber shown in FIG. 2A.
FIG. 3 is an outline diagram that shows a typical method of measuring an outer diameter of an optical fiber during drawing process.
FIG. 4A is an outline diagram that shows an example of a method of measuring an outer diameter of an optical fiber having a square cross section during drawing process.
FIG. 4B is an outline diagram that shows an example of a method of measuring an outer diameter of an optical fiber having a square cross section during drawing process.
FIG. 5 is a cross-sectional view of a triangular double-clad fiber.
FIG. 6 is a cross-sectional view of a square double-clad fiber.
FIG. 7 is a graph that shows the angular dependency of an outer diameter of a triangular double-clad fiber.
FIG. 8 is a graph that shows the angular dependency of an outer diameter of a square double-clad fiber.
FIG. 9 is a graph that shows the angular dependency of an outer diameter of a heptagonal double-clad fiber.
FIG. 10 is a graph that shows the relationship between the number of sides of the cross section of a polygonal optical fiber and the fluctuation of the outer diameter due to the angle change.
FIG. 11 is a cross-sectional view of a heptagonal double-clad fiber fabricated in Example 1.
FIG. 12 is a graph that shows the result of Example 1 and shows a comparison of the dependency of absorption on the fiber length between the heptagonal double-clad fiber and a circular double-clad fiber (comparative example).
FIG. 13 is a graph that shows the result of Example 1 and shows a comparison of outer diameter stability between the heptagonal double-clad fiber and a hexagonal double-clad fiber (comparative example).
FIG. 14A is a cross-sectional view of a triple-clad fiber.
FIG. 14B is a drawing that shows the refractive index profile of the cross section of the optical fiber shown in FIG. 14A.

### DESCRIPTION OF THE REFERENCE SYMBOLS

- 1, 5, 15, 19, 23: CORE
- 2, 2A, 2B, 16, 20, 24: INNER CLADDING
- 3, 7,21: OUTER CLADDING
- 4, 9: PROTECTIVE COATING
- 6: FIRST CLADDING
- 7: SECOND CLADDING
- 8: THIRD CLADDING
- 10, 4: OPTICAL FIBER
- 11: LASER SOURCE
- 12: DETECTOR
- 13: LASER LIGHT
- 18: TRIANGULAR DOUBLE-CLAD FIBER
- 22: SQUARE DOUBLE-CLAD FIBER
- 26: HEPTAGONAL DOUBLE-CLAD FIBER

### BEST MODE FOR CARRYING OUT THE INVENTION

Hereinbelow an embodiment of the present invention will be described with reference to the appended drawings.

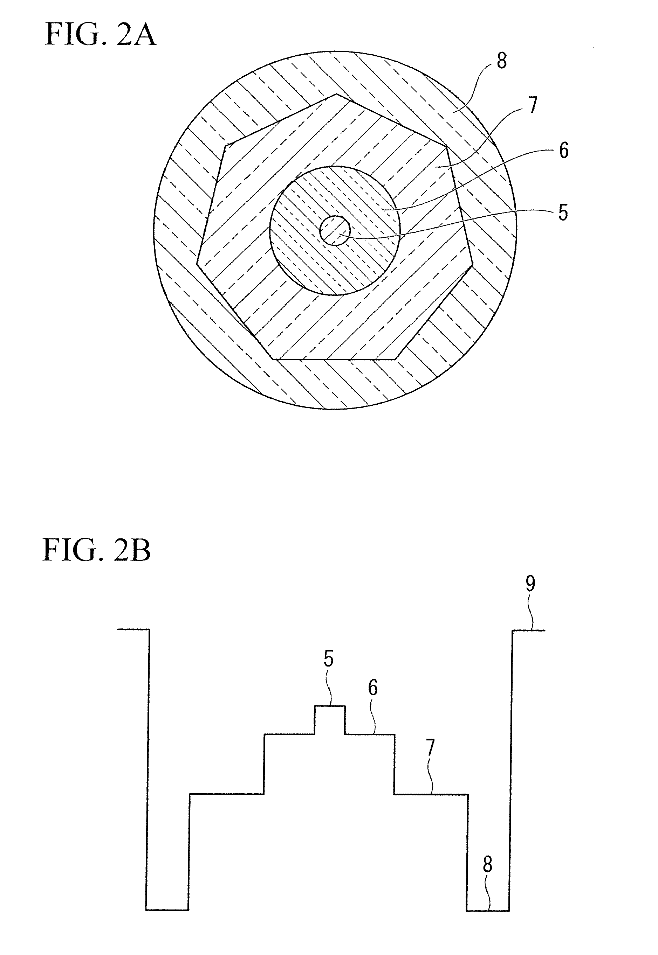

FIG. 2A and FIG. 2B show a first embodiment of a rare-earth doped core multi-clad fiber according to the present invention, with FIG. 2A being a cross-sectional view of the rare-earth doped core multi-clad fiber, and FIG. 2B being a drawing that shows the refractive index profile of the cross section of the fiber. The rare-earth doped core multi-clad fiber of the present embodiment has a structure in which a first cladding 6 is concentrically provided on the outside of a core 5 that is doped with a rare-earth element, a second cladding 7 having a regular heptagonal cross section is provided on the outside of the first cladding 6, a third cladding 8 which is the outermost cladding made of a polymer and has a circular cross section is provided on the outside of the second cladding 7, and a protective coating 9 is provided on the outside thereof.

Besides a dopant that raises the refractive index, a rare-earth element is also doped in the core 5. The doping region of the rare-earth element may be the entire core 5, or may be a portion of the core 5. Moreover, the rare-earth element may be doped to a portion of the first cladding 6. A waveguide structure is formed by raising the refractive index of the core 5 higher than that of the surrounding cladding 6. In this waveguide structure, seed light to be amplified, the amplified signal light, the oscillated laser light, and the like, are guided. Dopants that raise the refractive index include Ge, Al, P and the like. They may be used together, or may be used with F, B and the like.

A rare-earth element doped in the core 5 is selected according to the pumping wavelength, amplification wavelength, and laser oscillation wavelength. Er is used in order to obtain output at the wavelength of 1550 nm, which is used in optical tele-communication, and Yb is used in order to obtain output at the wavelength of 1060 nm, which is used in material processing. In addition, Tm, Bi, Cr, Ce, Nd, Eu, or the like may be added. Also, in order to avoid upconversion or to obtain a sensitization action by co-doping, not only doping of a single rare-earth element but co-doping of two or more rare-earth elements is performed in some cases. Similarly, Ge, Al, P, F, B and the like and combinations thereof are generally used as a refractive-index adjustment dopant. In addition, Ti, Bi, Cl and the like are also conceivable as a dopant. Also, dispersing agent of a rare-earth element may also be added simultaneously. Suitable dispersing agents other than the above include Cr, Ga, In, As, Sb, and the like.
Generally, the refractive index profile of the core 5 is a step like profile in which the refractive index of the core is constant, but according to the requirements for the optical characteristics of the core 5 determined by the refractive index of the core 5, various refractive index profiles such as a dual-shape type, a segment core type, and a ring type may be adopted. Moreover, although the core 5 is generally used for single mode propagation, multi-mode propagation is also possible, and it may also have a structure of effectively single mode propagation so as to remove higher-order modes by bending (although the waveguide structure is multi-mode).

In the rare-earth doped core multi-clad fiber according to the present invention, since it is advantageous in terms of cost that the cladding configuration is as simple as possible, it is preferable for multi-cladding to have double cladding or triple cladding. When there are no particular characteristic requirements, simpler double cladding is preferable, but when there are characteristic requirements, triple cladding and beyond (quadruple cladding) may be used. The optimal structure may be suitably selected in consideration of these required characteristics and cost. The present embodiment illustrates a fiber in which the core 5, the first cladding 6 and the second cladding 7 are made of a silica glass-based material, but the present invention is not limited thereto.

Pumping light for exciting the rare-earth element so as to amplify signal light is guided in the first cladding 6 and the second cladding 7 (the inner cladding in the case of a double-clad fiber). The first cladding 6 and the second cladding 7 also have waveguide structures since the third cladding 8 with a lower refractive index is disposed on the outside thereof. By inputting pumping light into the first cladding 6 and the second cladding 7 and not the core 5, it is possible to broaden the light-guiding cross-sectional area of the pumping light, and as a result, the power density of pumping light falls, and it becomes possible to avoid optical damage of the fiber due to the pumping light. Therefore, it is possible to input a larger amount of pumping light into the rare-earth doped core multi-clad fiber, and it becomes possible to obtain output light of greater power without destroying a fiber.

There are a number of methods of imparting a difference in the refractive index between the second cladding 7 and the third cladding 8 (in the case of a double-clad fiber, the inner cladding and outer cladding). A dopant that raises the refractive index may be added to the second cladding 7, or a holey cladding in which holes are provided in glass that constitutes a fiber so as to substantially reduce the refractive index may be provided between the second cladding 7 and the third cladding 8. Most generally a polymer with a lower refractive index than the second cladding 7 is provided on the outside of the second cladding 7. Since this polymer cladding is an outer cladding material that is outstanding in terms of productivity and is manufactured at low cost, it is possible to provide an inexpensive fiber.

In the rare-earth doped core multi-clad fiber of the present embodiment, the shape of the boundary between the second cladding 7 that is the second cladding from the outside and the third cladding 8 that is the outermost cladding is a regular heptagonal shape that does not have two-fold rotational symmetry. Thereby, it is possible to inhibit the skew mode of the fiber, improve the controllability of the outer shape of the second cladding 7, and achieve low-cost production.

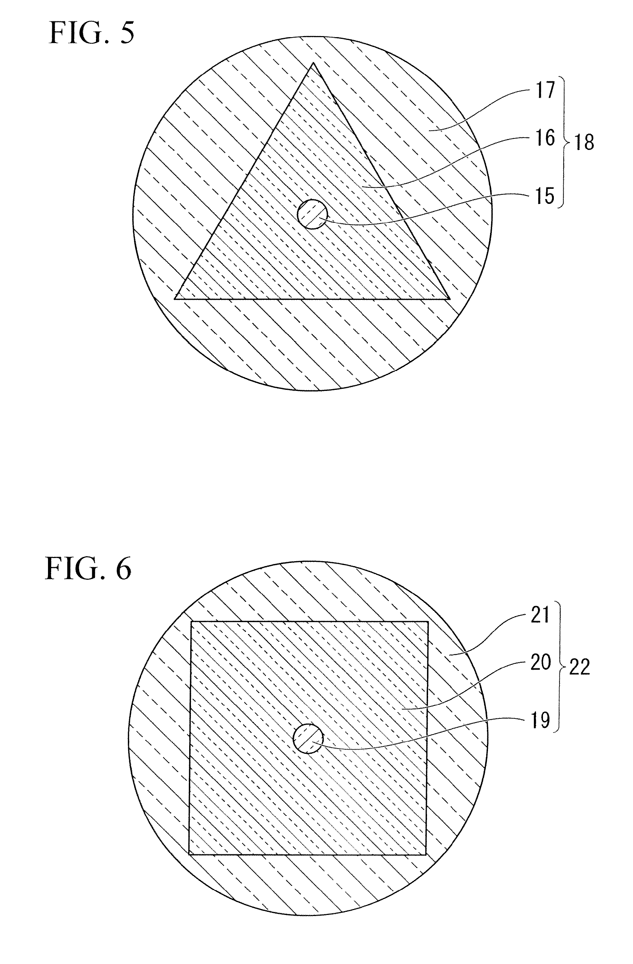

The improvement in controllability of the outer diameter when the boundary shape between the second cladding from the outside and the outermost cladding does not have two-fold rotational symmetry will be described using a regular polygon as an example.
The polygon with the minimum number of sides in which the boundary shape between the second cladding from the outside and the outermost cladding has two-fold rotational symmetry is a square, while the polygon with the minimum number of sides in which the boundary shape does not have two-fold rotational symmetry is a triangle. FIG. 5 is a cross-sectional view that shows a triangular double-clad fiber 18 in which an inner cladding 16 having a triangular cross section is provided on the outside of a core 15, and an outer cladding 17 is provided on the outside of the inner cladding 16. Also, FIG. 6 is a cross-sectional view that shows a square double-clad fiber 22 in which an inner cladding 20 having a square cross section is provided on the outside of a core 19, and an outer cladding 21 is provided on the outside of the inner cladding 20.

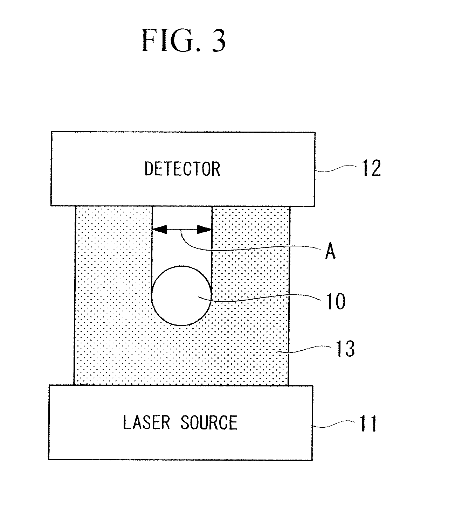

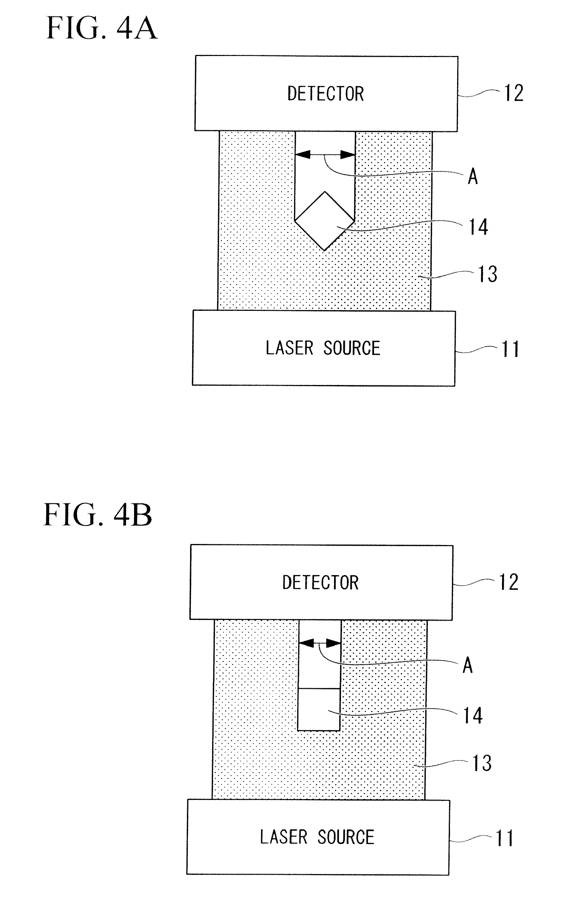

FIG. 3 and FIGS. 4A and 4B are configuration diagrams that illustrate the method of measuring the outer diameter of the optical fibers 10 and 14, with FIG. 3 being the case of the optical fiber 10 having a circular cross section, FIG. 4A the case of measuring the maximum outer diameter of the optical fiber 14 having a square cross section, and FIG. 4B the case of measuring the minimum outer diameter of the optical fiber 14 having a square cross section. In these drawings, reference numeral 10 denotes an optical fiber with a circular cross section, 11 denotes a laser source, 12 denotes a detector, 13 denotes a laser light, and 14 denotes an optical fiber with a square cross section. In this outer diameter measuring method, the optical fibers 10 and 14 are inserted between the laser source 11 that emits the laser light 13 in a strip shape or plane shape and the detector 12 that receives this laser light 13. By finding a portion where the laser light is blocked corresponding to the outer diameter of the optical fiber 10 or 14, the outer diameter A of the optical fiber 10 or 14 is measured. As shown in FIG. 4A and FIG. 4B, in the case of measuring the outer diameter of a fiber whose cross section is polygonal, an angular dependency arises in which the outer diameter of the cross section differs depending on the angle it is viewed from.

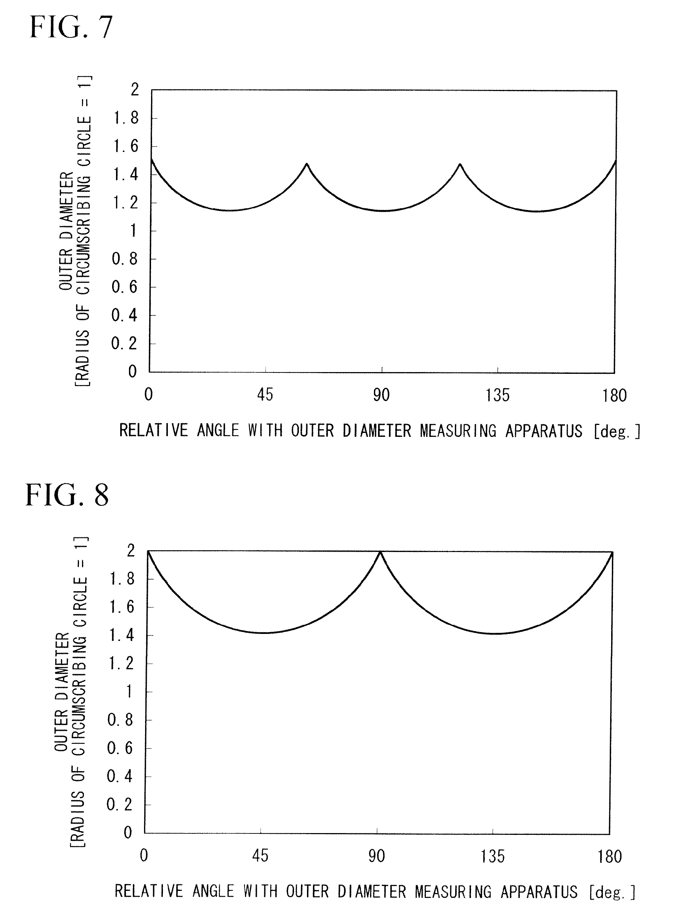

Using the outer diameter measuring method shown in FIGS. 3 to 4B, FIG. 7 shows the angular dependency in the case of measuring the outer diameter of an optical fiber with a triangular cross section, and FIG. 8 shows the angular dependency in the case of measuring the outer diameter of an optical fiber with a square cross section. In this case, the radius of a circle that circumscribes a polygon of the cross section is normalized to be 1. For a regular polygon, the fewer the number of sides, the greater the constrainment of the skew mode. In conceptual terms, it could be regarded such that the greater the deformation in shape from a circle, the more the skew mode is constrained (precisely, it is possible to calculate by using ray tracing method or the like). Accordingly, it is possible to constrain the skew mode more effectively with a triangular cross section than with a square cross section. On the other hand, from the viewpoint of outer diameter controllability, the outer diameter is more stable when the difference between the maximum diameter and minimum diameter of the angular dependency of an outer diameter (to be precise, the ratio of the difference with respect to the average outer diameter) is smaller. In the case of triangle and square, the ratio of the difference between the maximum diameter and the minimum diameter with respect to the average diameter is 27% and 37%, respectively. Therefore, the outer diameter controllability is better for a triangular cross section. Accordingly, the skew mode constrainment and outer diameter stability are better in the case of the cross section being triangular. This is the advantage of the boundary shape between the second cladding and the outermost cladding not having two-fold rotational symmetry.

Next, a description of the fiber drawing step of transforming a fiber preform into a fiber of the desired structure, and a description of the low manufacturability of conventional fibers that was disclosed in Patent Documents 1 to 3 mentioned above will be given. Note that in actual fiber manufacturing, in most cases the angle of a polygon takes on some rounding because the manufacturing process includes a step of applying heat. Also, in relation to a regular polygon, small deformation from a regular polygon may occur from the viewpoint of processing accuracy, but such misalignment from these theoretical shapes does not affect the skew mode controllability and outer diameter stability. Accordingly, it need only be a substantial polygon or a substantial regular polygon, and moreover the substantial polygon or the substantial regular polygon also includes that with manufacturing deformations.

A fiber preform is a cylindrical glass body in which, while having the same cross-sectional refractive index profile as a fiber or a portion of a fiber, the outer diameter is between several times to several thousand times greater than that of the fiber. In manufacturing process, by lowering the viscosity of the fiber preform in a heat furnace and pulling the lower end of the preform from the bottom of the furnace, a fiber is thinly elongated and made to a glass fiber with desired outer diameter. This process is called fiber drawing. By controlling the furnace temperature, tension, speed of pulling, outer diameter and the like by various methods, the desired optical glass fiber can be obtained. Generally, immediately after this drawing step, a step of coating the outside of the fiber with a resin or polymer and curing it is performed, thereby providing a protective resin layer or polymer cladding. A resin or polymer that has a heat-curable property or UV-curable property is used, and so by placing a heat source or UV light source downward through which it passes after coating, it is possible to deploy a protective resin layer or polymer cladding in an online manner in the fiber drawing process. Also, by disposing them in series, it is possible to provide a polymer cladding layer and protective resin layer in one time.

In such a fiber drawing step, the main factors influencing the manufacturability of a conventional D-shape cladding structure or polygonal cladding structure are difficulties relating to the outer diameter measurement and outer diameter control of a fiber. Normally, in outer diameter measurement/control of a fiber, while measuring the "outer diameter" obtained by a laser scanning or the like online, outer diameter control is performed so that the measured outer diameter becomes constant. Fiber outer diameter referred here may mean the outer diameter including the polymer or resin, or only the glass portion (the region to the inner cladding) prior to coating with the polymer or the like. This choice depends on which should be more precisely controlled. In the case of the present invention, since control of propagation of the pumping light in the inner cladding (that is, the glass cladding) is important, the diameter control of the glass portion is important. For that reason, it is preferable to measure and control the outer diameter of the glass portion. Non-Patent Document 2 and the like disclose a number of examples of outer diameter measurement methods. Also, Patent Document 4 and Patent Document 5 disclose fiber drawing processes and outer diameter measurement and control methods.

Here, in an ordinary optical fiber drawing process, the shape of the outer circumference of the glass of the fiber (in the case of the present invention, the shape of the boundary between the second cladding from the outside and the outermost cladding) is generally circular. In the case of a fiber that has a circular cross section, the outer diameter thereof is constant at any angle it is viewed from.

However, for example in the case of the D-shape cladding structure that is disclosed in Patent Document 3, in the angle of a region including a side that is grinded into the D-shape, compared to an angle that does not include that side, the outer diameter is measured small. The outer diameter measuring apparatus is normally fixed at a predetermined position, and the outer diameter is measured from one direction (refer to Patent Document 5). The outer diameter measurement direction may be two directions shifted by 90 degrees, but since the device cost increases by the number of outer diameter measuring apparatuses, it is not advantageous for manufacturing an inexpensive fiber.

On the other hand, when drawing a fiber, the fiber does not constantly maintain the same angle at the position of measuring the outer diameter due to twisting or the like during spooling or drawing of the fiber, and so fluctuations in angle occur during fiber drawing. Accordingly, the relative angle of the outer diameter measuring apparatus with respect to the fiber axis is not constant over time. That is, in the case of drawing a fiber in which the cross section is not circular, in accordance with the fluctuation in angle during fiber drawing, the measured value of the fiber outer diameter is erroneously detected as the fiber outer diameter fluctuating in the lengthwise direction by the rotation (that is, in spite of performing uniform diameter drawing in actuality, a diameter fluctuation due to the angle will be detected). Since the outer diameter control tries to control the outer diameter based on such diameter fluctuation data, the actual fiber outer diameter ends up fluctuating, so it is difficult to draw the fiber diameter uniformly.
This causes the same result even in the case of a polygonal fiber. As a result, since microbending losses occur and the length of defective portions because of the fiber diameter irregularity becomes longer due to change of optical characteristics in the lengthwise direction, problems of fiber yields not improving and of the fiber cost rising arise.

In the present invention, since the shape of the boundary between the second cladding from the outside and the outermost cladding is constituted to not have two-fold rotational symmetry, it is possible to lessen the difference between the maximum diameter and the minimum diameter of the angular dependency of the outer diameter of the inner cladding (to be precise, the ratio of the difference with respect to the average outer diameter of the inner cladding). As a result, it is possible to readily control the outer diameter of the fiber, and it is possible to manufacture a fiber with a good yield. Therefore, it is possible to manufacture a rare-earth doped core multi-clad fiber at a reasonable price.

Next, the requirements for minimizing the influence on outer diameter control will be described. Basically, it is desirable that the ratio of the difference between the maximum diameter and the minimum diameter with respect to the average diameter is smaller. According to the deliberations of the inventors, when the ratio of the difference is 7% or less, it is possible to improve the yield of the fiber outer diameter, and is preferably 3% or less. Conversely, even in the case of the fiber not having two-fold rotational symmetry, when a polygonal cross section is formed so as to lower the ratio of the difference to less than 1%, constrainment of the skew mode is insufficient due to the closer periphery shape to a circle. Also, in this case, as the number of sides increases, processing becomes more complicated and requires more man-hours, so is not desirable from a cost viewpoint. In that sense, the number of sides of a polygon should be limited to 15 or less.

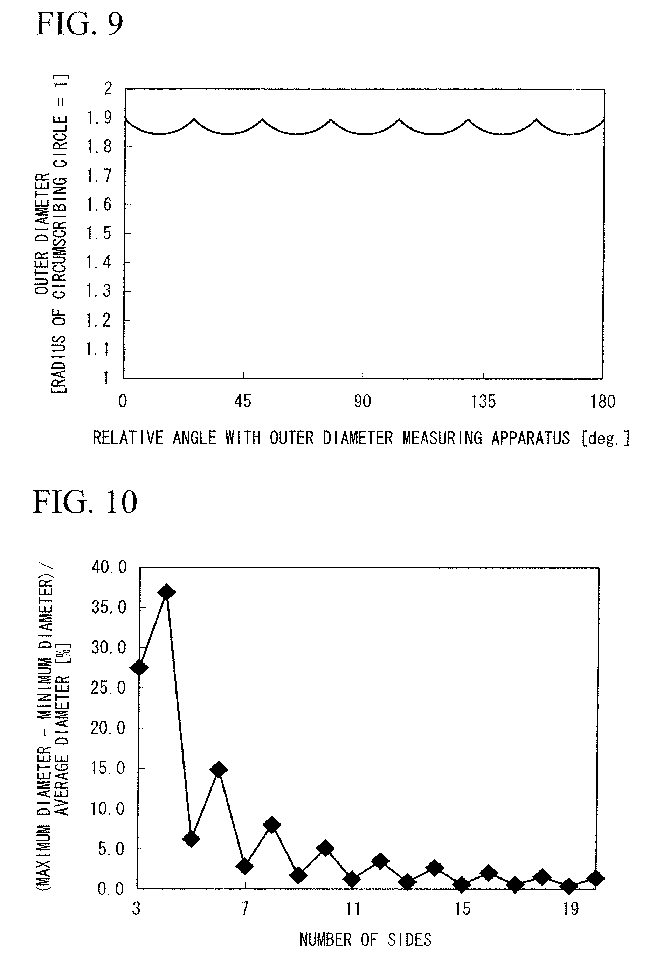

Also, when making the cross section into a regular polygon, it is preferred to give consideration to the ease of processing and the ease of connecting fibers to each other. Also, in order to make the ratio of the difference between the maximum diameter and the minimum diameter with respect to the average diameter 7% or less, a five-sided polygon or greater is preferred. On the other hand, a polygon of 17 or more sides is not preferred from the viewpoint of man-hour and skew mode suppression. In particular, a pentagon, heptagon, and nonagon are preferred from the viewpoint of skew mode suppression and lower costs (fiber drawing stability, polygon processing). According to the investigations of the inventors, among these, the heptagon is the most balanced. FIG. 9 is a graph that shows the angular dependency of the outer diameter in the case of the heptagonal cross section. For reference, FIG. 10 shows the numerical computation result that indicates the relationship between each polygon and the ratio of the difference between the maximum diameter and the minimum diameter with respect to the average diameter.

In an optical amplifier or fiber laser manufactured using the rare-earth doped core multi-clad fiber of the present invention, since the skew mode of the fiber portion is constrained and the cost is lower, it becomes a high performance and low-cost device with a high amplification efficiency.

### [Examples]

### [Example 1]

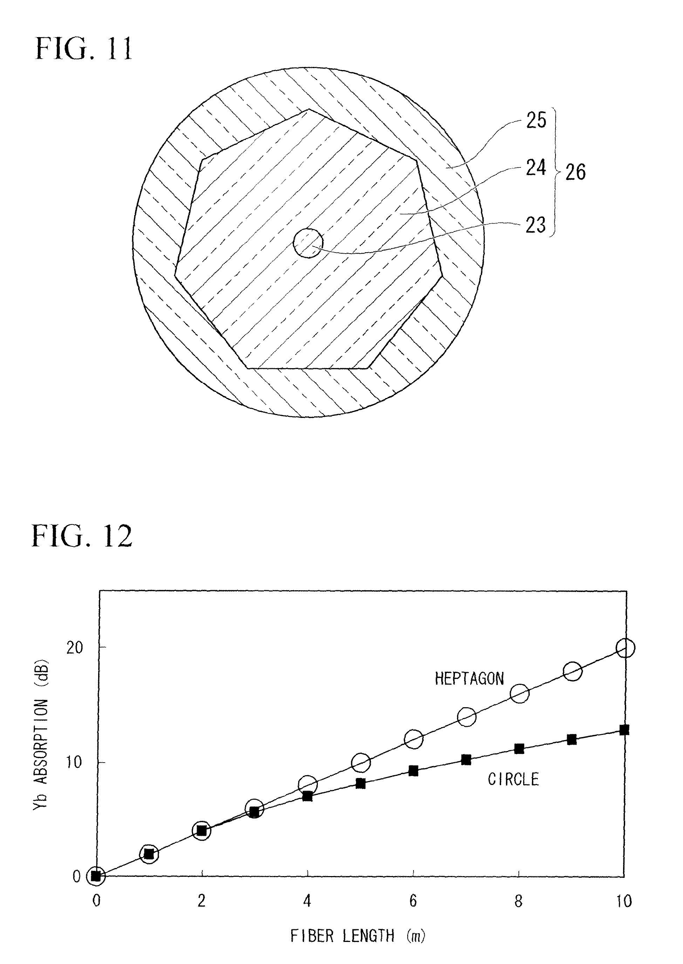

A heptagonal double-clad fiber in which the cross sectional shape of the inner cladding is a regular heptagon as shown in FIG. 11 was fabricated. In FIG. 11, reference numeral 23 denotes a core, 24 an inner cladding, 25 an outer cladding made of polymer, and 26 a heptagonal double-clad fiber. The manufacturing method of a fiber preform was a combination of the VAD method and the solution method, and the fiber was drawn while controlling the outer diameter after trimming the outer periphery of the inner cladding into a regular heptagon. In this fiber drawing, the circumscribing circle of the heptagon was approximately 400 µm, the core diameter was approximately 20 µm, and the relative refractive-index difference (Δ) of the core was approximately 0.13%.
Doping was performed to approximately 1 wt% using ytterbium (Yb) as the rare-earth element. Also, a UV-curable polymer cladding agent was coated on the drawn fiber with a thickness of approximately 20 µm and then was cured to form the outer cladding.

As a comparative example, a double-clad fiber with an inner cladding having a circular cross section as shown in FIG. 1 was fabricated, with the same materials and dimensions as Example 1.

FIG. 12 shows a comparison of the length-dependency of the Yb absorption between the heptagonal double-clad fiber and the circular double-clad fiber (comparative example). FIG. 12 shows that, in the case of the absorption being proportional to the length, this means that there is no skew mode. Conversely, a fiber in which absorption becomes less as the length becomes longer is a fiber in which skew modes are large and so the amplification efficiency becomes low. From FIG. 12, it is evident that the absorption is more proportional to the length for the fiber processed into a heptagon (Example 1), and so the skew modes are few.

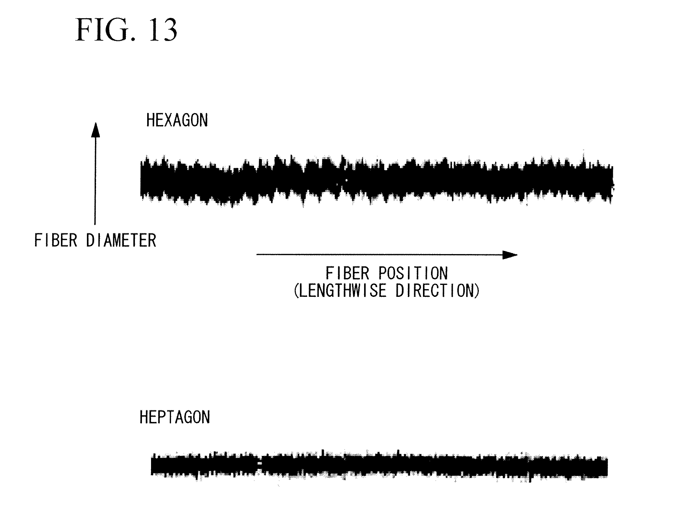

Also, as another comparison, a double-clad fiber was fabricated in which the boundary between the inner cladding and the outer cladding is a regular hexagon, with the same materials and dimensions as the Example 1. FIG. 13 shows the result of measuring online the outer diameter of the optical fiber during fiber drawing.
Compared to the hexagon (comparative example), the heptagon had better outer diameter stability. Also, with regard to the outer diameter of the fiber that was obtained as a result, in the case of the heptagon, variability in the outer diameter is less, and so a fiber with stable characteristics was obtained.

### [Example 2]

The triple-clad fiber in which the cross section of the second cladding from the outside is a regular heptagon as shown in FIG. 2 was fabricated. The fabrication method of a fiber perform was a combination of the MCVD method and the solution method, and fiber was drawn while controlling the outer diameter after grinding the outer periphery of the second cladding into a heptagon. The circumscribing circle of the heptagon was approximately 400 µm, the core diameter was approximately 30 µm, and the relative refractive-index difference (Δ) of the core was approximately 0.13%. Doping was performed to approximately 2 wt% using ytterbium (Yb) as the rare-earth element. Also, a UV-curable polymer cladding agent was coated on the drawn fiber with a thickness of approximately 20 µm and then was cured to form the outer cladding.

As a result of trial production of a fiber laser using this fiber, it was possible to obtain a fiber laser with a high pumping light utilization efficiency of a slope efficiency of 55%.

### [Other Examples]

Table 1 shows a list of trial production fibers of Example 3 to Example 11.

**[Table 1]**

| | Unit | Example 3 | Example 4 | Example 5 | Example 6 | Example 7 | Example 8 | Example 9 | Example 10 | Example 11 |
|---|---|---|---|---|---|---|---|---|---|---|
| No. of cladding layers | - | 2 | 3 | 2 | 2 | 2 | 2 | 2 | 2 | 4 |
| No. of glass cladding layers | - | 1 | 2 | 1 | 1 | 1 | 1 | 1 | 1 | 3 |
| No. of polymer cladding layers | - | 1 | 1 | 1 | 1 | 1 | 1 | 1 | 1 | 1 |
| | | | | | | | | | | |
| No. of slides | - | 5 | 9 | 7 | 7 | 5 | 7 | 7 | 9 | 7 |
| | | | | | | | | | | |
| Preform fabrication method | - | VAD+ solution | MCVD+ solution | VAD + spraying | MCVD + solution | MCVD+ solution | VAD + spraying | MCVD+ solution | MCVD | MCVD+ solution |
| | | | | | | | | | | |
| Outer diameter | µm | 420 | 430 | 130 | 125 | 135 | 270 | 140 | 140 | 350 |
| Glass cladding diameter | µm | 385 | 392 | 125 | 110 | 124 | 245 | 124 | 125 | 320 |
| Innermost cladding diameter | µm | | 85 | | | | | | | 105 |
| Core diameter | µm | 30 | 20 | 10 | 5 | 7 | 10 | 20 | 5 | 20 |
| Relative refractive-index difference* | % | 0.11 | 0.08 | 0.15 | 0.70 | 0.42 | 0.12 | 0.13 | 1.4 | 0.12 |
| | | | | | | | | | | |
| Doped rare-earth clement | - | Yb | Yb | Er | Er/Yb | Yb | Yb | Yb | Tm | Yb |
| Doped concentration | Wt% | 1.5 | 2.7 | 2.0×10³ wt ppm | Er: 4.5×10³ wt ppm Yb: 5.5×10³ wt ppm | 0.8 | 2.1 | 1.8 | 7.0×10² wt ppm | 3.5 |

Table 1 shows the broad application range of the present invention, and does not particularly show the result of comparison with comparative examples.
For the rare-earth doped core multi-clad fibers of Example 3 to Example 11, the same effects as the above-described examples were obtained.

### INDUSTRIAL APPLICABILITY

As described above, according to the present invention, it is possible to provide a rare-earth doped core multi-clad fiber that has an outstanding skew mode constraining effect at a low cost.

## Claims

1. A rare-earth doped core multi-clad fiber comprising:
a core that includes a rare-earth element; and
a plurality of cladding layers that surround the core, wherein:
an outermost cladding of the plurality of cladding layers is made of polymer cladding;
the plurality of cladding layers have a polygonal inner cladding; and
a shape of a boundary between a second cladding from the outside and the outermost cladding does not have two-fold rotational symmetry.

2. The rare-earth doped core multi-clad fiber according to claim 1, wherein:
the difference between the maximum outer diameter and the minimum outer diameter of the cross section of the polygonal inner cladding is 6% or less of the average outer diameter; and
the cross section of the polygonal inner cladding has 15 sides or less.

3. The rare-earth doped core multi-clad fiber according to claim 1 or claim 2, wherein the cross section of the polygonal inner cladding is substantially a regular polygonal shape which has five sides or more and does not have two-fold rotational symmetry.

4. The rare-earth doped core multi-clad fiber according to claim 3, wherein the regular polygon is a pentagon, a heptagon, or a nonagon.

5. The rare-earth doped core multi-clad fiber according to claim 1, wherein the fiber includes at least one of Yb or Er as the rare-earth element.

6. The rare-earth doped core multi-clad fiber according to claim 1, wherein the multi-clad fiber is a double-clad fiber.

7. A fiber amplifier that has the rare-earth doped core multi-clad fiber according to claim 1 as a light amplifying medium.

8. A fiber laser that has the rare-earth doped core multi-clad fiber according to claim 1 as a light amplifying medium.
